# EUROPÄISCHE PATENTSCHRIFT

(11) **EP 4 434 394 B1**
(45) Veröffentlichungstag und Bekanntmachung des Hinweises auf die Patenterteilung: **22.10.2025**
(21) Anmeldenummer: 24164079.6
(22) Anmeldetag: 18.03.2024
(51) Int. Cl.: A47B 21/06

(54) **KABELFÜHRUNG FÜR HÖHENVERSTELLBARE BÜROMÖBEL**
CABLE GUIDE FOR HEIGHT ADJUSTABLE OFFICE FURNITURE
GUIDE-CÂBLE POUR MEUBLES DE BUREAU À HAUTEUR RÉGLABLE

(30) Priorität: 24.03.2023 AT 600492023
(43) Veröffentlichungstag der Anmeldung: 25.09.2024
(73) Patentinhaber: power concepts GmbH, 1030 Wien (AT)
(72) Erfinder: Kober, Johannes, 1030 Wien (AT)
(74) Vertreter: Babeluk Patentanwälte GmbH

(56) Entgegenhaltungen:
- DE-A1- 102013 111 622
- DE-B3- 10 302 555

## Beschreibung

Die vorliegende Erfindung betrifft eine Kabelführung für höhenverstellbare Büromöbel, mit einem Fußteil, einem flexiblen Führungsteil und einem Kopfteil, wobei der flexible Führungsteil aus einem Schlauch besteht, in dem mindestens eine flexible Führungsschiene in der Form eines biegeelastischen Stabes angeordnet ist und in dem ein Aufnahmekanal für die zu führenden Kabel vorgesehen ist.

Kabelführungen werden beispielsweise dazu benötigt, bei Schreibtischen Kabel vom Boden in den Bereich der Schreibtischplatte zu führen, wo typischerweise eine Kabelwanne oder ein Kabelkanal vorgesehen ist. Solche Kabelführungen sollen vor allem frei verlaufende Kabel vermeiden, die sowohl leicht beschädigt werden können als auch optisch nicht ansprechend sind. Eine Herausforderung stellen dabei höhenverstellbare Schreibtische dar, da die Kabel in allen möglichen Stellungen der Schreibtischplatte sicher geführt werden sollen.

Die DE 10 2113 111 622 B offenbart einen Schreibtisch mit einer Kabelführung, die entlang eines teleskopisch verstellbaren Tischbeins angeordnet ist. Dabei ist ein Schlauch, in dem die Kabel geführt sind, am untersten Element eines Bottom-up Tischbeins direkt befestigt, wird darüber entlang von weiteren Elementen des Tischbeins weitergeführt und dann in einen Führungskanal geleitet, in dem die Kabel in Längsrichtung gleiten können, um die durch die Höhenverstellung verursachten Verschiebungen ausgleichen zu können. Eine sichere und zuverlässige Führung der Kabel kann so nur schwer sichergestellt werden. Insbesondere ist es nicht möglich, unzulässige Zugspannungen in den Kabeln zuverlässig zu verhindern. Das bekannte System ist überdies für sogenannte Upside-down Tischbeine, die nach unten ausziehbar sind und sich somit nach unten verjüngen, nicht geeignet.

Aufgabe der Erfindung ist es, diese Nachteile zu vermeiden und eine Lösung anzugeben, bei der die Kabel sicher, formschön und frei von Zugspannungen geführt werden können. Die Lösung soll dabei für alle Arten von Tischbeinen geeignet sein.

Erfindungsgemäß ist vorgesehen, dass der Fußteil einen starren Führungsschenkel aufweist, der im Schlauch teilweise anliegend an die flexible Führungsschiene angeordnet ist. Der Führungsschenkel ist dabei in Gebrauchslage typischerweise senkrecht nach oben ragend angeordnet und gibt dadurch den Verlauf der Kabelführung im unteren Abschnitt vor. Der Führungsschenkel kann dabei im Wesentlichen an ein Tischbein anliegend angeordnet sein, aber auch völlig unabhängig von einem Tischbein sein. Im zusammengebauten Zustand wird der Führungsschenkel völlig vom Schlauch umhüllt und tritt daher optisch nicht in Erscheinung. Die Führungsschiene liegt typischerweise nur teilweise am Führungsschenkel an, d.h., dass ein unterer Anschnitt der Führungsschiene am einem oberen Abschnitt des Führungsschenkels anliegt.

Oberhalb des Fußteils verläuft der Schlauch frei und mündet an seiner Oberseite in den Kopfteil. In der maximal hohen Position des Tisches verläuft der Schlauch typischerweise annähernd geradlinig. Wird die Tischplatte jedoch abgesenkt, dann bildet sich eine Schlaufe, wobei die Krümmungsradien aufgrund der im Schlauch angeordneten flexiblen Führungsschiene in der Form eines biegeelastischen Stabes stets oberhalb zulässiger Grenzen bleiben und keine Knicke auftreten. Der schlaufenförmige Verlauf ist formschön und durch die vorgegebene Richtung des Schlauchs ist am unteren Ende und vorzugsweise auch am oberen Ende sicher determiniert.

Eine besonders sichere Führung des Schlauchs insbesondere in seinem unteren Bereich kann bevorzugt dadurch erreicht werden, dass der starre Führungsschenkel fest mit dem Schlauch verbunden ist. Damit erfolgt die Verbindung zwischen dem Führungsschenkel und der Führungsschiene in Längsrichtung über den Schlauch, der auch sicherstellt, dass diese Bauteile im Überlappungsbereich eng aneinander anliegen, so dass der Führungsschenkel ein von der Führungsschiene aufgebrachtes Drehmoment aufnehmen kann.

Eine konstruktiv besonders günstige Ausführungsvariante der Erfindung sieht vor, dass der Fußteil aus dem starren Führungsschenkel und einem dazu im Wesentlichen rechtwinkelig angeordneten Halteschenkel besteht. Der Halteschenkel kann dabei beispielsweise an einem Fuß eines Tischbeins anliegend im Wesentlichen waagrecht befestigt werden, so dass der starre Führungsschenkel senkrecht nach oben ragt. Die Befestigung kann bevorzugt über magnetische Befestigungselemente erfolgen, die am Halteschenkel angebracht sind, so dass zur Befestigung keine Eingriffe am Tisch erforderlich sind.

Es ist insbesondere günstig, wenn sowohl die flexible Führungsschiene als auch der starre Führungsschenkel einen rechteckigen Querschnitt aufweisen. Die Führungsschiene verformt sich dadurch überwiegend oder ausschließlich in einer virtuellen Ebene, in der die Biegesteifigkeit gering ist, so dass ein definierter und formschöner Verlauf der Kabelführung erreicht wird.

Eine in der Handhabung besonders praktikable Lösung wird erreicht, indem der Schlauch aus einem Gewebe besteht und zwei in Längsrichtung verlaufende Kammern aufweist. Die erste Kammer ist zur Aufnahme der flexiblen Führungsschiene vorgesehen, während die zweite Kammer zur Aufnahme der zu führenden Kabel vorbereitet ist.

Besonders praktikabel ist es, wenn der Schlauch an mindestens einem Ende einen Reißverschluss aufweist. Damit kann der Schlauch bei der Herstellung am Ende geöffnet werden und auf den Fußteil und/oder den Kopfteil aufgesteckt werden. Danach wird der Reißverschluss geschlossen, wodurch eine mechanische Verbindung zwischen dem Schlauch samt Führungsschiene und dem Fußteil und/oder dem Kopfteil hergestellt wird. Dabei kann beispielsweise der Kopfteil durch den Schlauch hindurch über Schrauben mit der Führungsschiene verbunden werden, um eine besonders belastbare Verbindung zu erzielen. Der Fußteil kann dann unterhalb der Führungsschiene direkt mit dem Schlauch verbunden werden. Es kann aber auch umgekehrt der Fußteil durch den Schlauch hindurch über Schrauben mit der Führungsschiene verbunden werden, wenn es die Situation erfordert.

Besonders vorzugsweise erstreckt sich der Reißverschluss über die gesamte Länge des Schlauchs. Dadurch ist es möglich, bei Bedarf den Schlauch in eingebautem Zustand zu öffnen und zusätzlich Kabel einzulegen oder Kabel zu entfernen, ohne die Kabelführung demontieren zu müssen.

Eine besonders hohe Sicherheit kann dadurch erreicht werden, dass am Fußteil und/oder am Kopfteil eine Zugentlastung angeordnet ist. Dadurch können Zugspannungen auf Kabel und allfällige Steckverbindungen in deren Verlauf sicher vermieden werden.

Eine besonders leichte Montage kann dadurch erreicht werden, dass die Führungsschiene über eine Schnappverbindung an dem Kopfteil anbringbar ist. In diesem Fall ist vorteilhaft, dass das Kopfteil bereits im Fertigungsprozess des Möbels erfolgen kann und jegliche Schraubmontage vor Ort wegfällt.

Mehrere Büromöbel können auf einfache Weise dadurch miteinander verkettet werden, dass der Kopfteil mehrere Verbindungselemente zur Anbringung mehrerer Kabelführungen aufweist.

Um eine selbsttätige Ausbildung einer Schlaufe beim Absenken der Tischplatte zu ermöglichen ist vorzugsweise vorgesehen, dass im eingebautem Zustand die Achse des flexiblen Führungsteils im Bereich des Fußteils in einem Abstand zur Achse des flexiblen Führungsteils im Bereich des Kopfteils angeordnet ist. Auf diese Weise wird beim Absenken eine Verteilung von Biegemomenten auf den Führungsteil ausgeübt, die die Ausbildung der Schlaufe begünstigen. Dabei beträgt der Abstand günstigerweise zwischen 10% und 40%, vorzugsweise zwischen 15% und 30% des maximalen Höhenunterschieds zwischen Fußteil und Kopfteil.

In der Folge wird die vorliegende Erfindung anhand der in den Figuren dargestellten Ausführungsbeispiele näher erläutert. Es zeigen:
- Fig. 1: ein Büromöbel mit einer erfindungsgemäßen Kabelführung in einer ersten Stellung in einer Schrägansicht;
- Fig. 2: das Büromöbel von Fig. 1 in einer zweiten Stellung;
- Fig. 3: verschiedene Ausführungsvarianten von erfindungsgemäßen Kabelführungen in einer Schrägansicht;
- Fig. 4: ein alternatives Büromöbel mit einer erfindungsgemäßen Kabelführung in einer ersten Stellung in einer Schrägansicht;
- Fig. 5: das Büromöbel von Fig. 4 in einer zweiten Stellung;
- Fig. 6: ein Detail von Fig. 4 und Fig. 5;
- Fig. 7: einen Fußteil in einer Schrägansicht;
- Fig. 8: einen Kopfteil in einer Schrägansicht;
- Fig. 9: einen alternativen Kopfteil in einer Schrägansicht;
- Fig. 10: einen Schlauch in einer Schrägansicht;
- Fig. 11: einen Schnitt nach Linie XI - XI in Fig. 10; und
- Fig. 12: ein Detail einer erfindungsgemäßen Kabelführung.

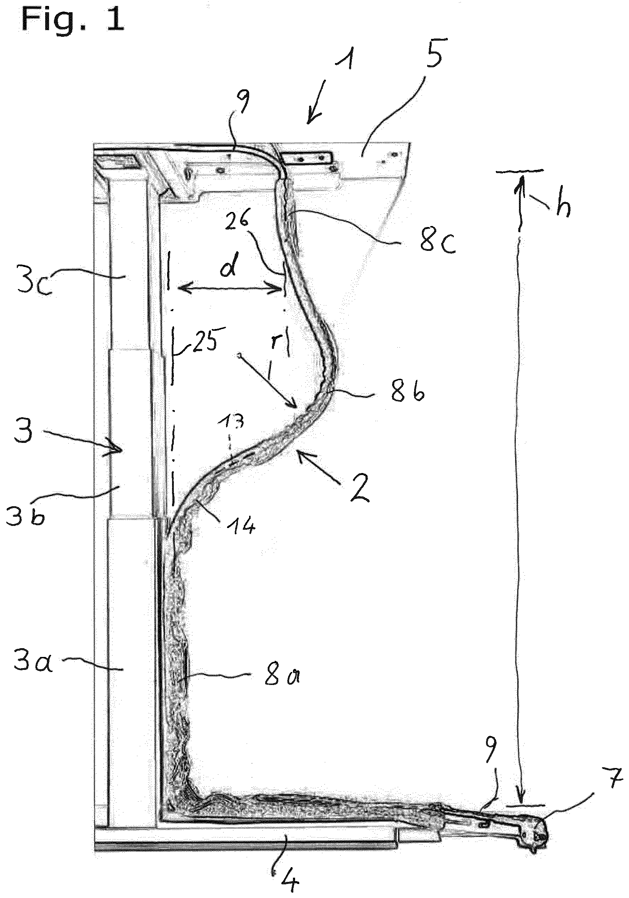

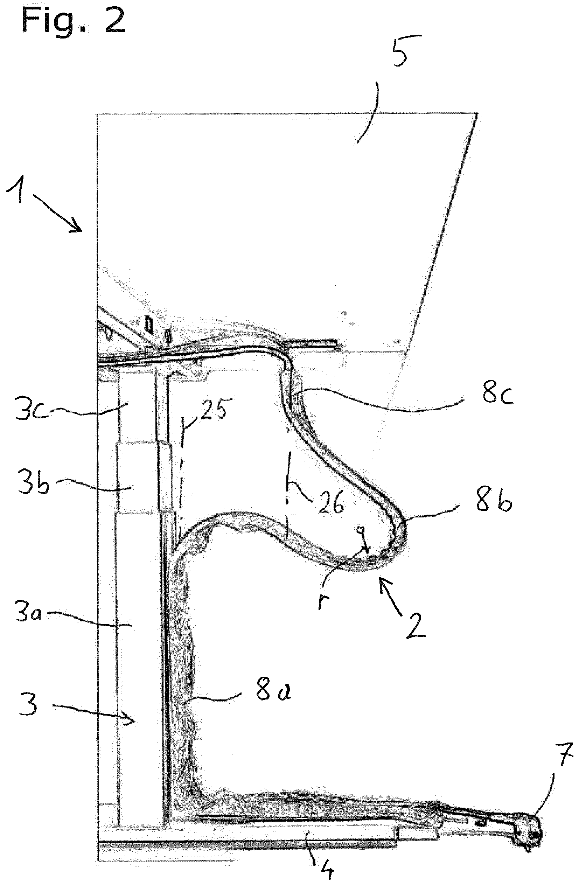

Fig. 1 und Fig. 2 zeigen eine erste Ausführungsvariante der Erfindung, mit einem Büromöbel in der Form eines Schreibtischs 1 mit einer daran angebrachten Kabelführung mit einem flexiblen Führungsteil 2. Der Schreibtisch 1 besitzt ein Tischbein 3, das teleskopisch ausgebildet ist, um eine Höhenverstellung der Tischplatte 5 zu ermöglichen. Am unteren Ende des Tischbeins 3 ist ein horizontaler Tischbeinausleger 4 vorgesehen. Das Tischbein 3 ist als sogenanntes Bottom-Up Bein ausgeführt, d.h., dass der unterste Abschnitt 3a den größten Querschnitt aufweist und die weiteren Abschnitte 3b und 3c jeweils kleinere Querschnitte besitzen und in dem jeweils darunter angeordneten Abschnitt 3a, 3b geführt sind.

Die Kabelführung mit dem flexiblen Führungsteil 2 verläuft zunächst waagrecht entlang des horizontalen Tischbeinauslegers 4, danach vertikal in einem unteren Abschnitt 8a entlang des Tischbeins 3, bildet danach eine Schlaufe 8b und wird in einem oberen Abschnitt 8c wiederum vertikal zur Tischplatte 5 geführt. Danach können die Kabel 9 in an sich bekannter Weise in einem Kabelkanal oder einer Kabelwanne weitergeführt und verteilt werden. Ein Stromstecker ist mit 7 angedeutet, über den die Kabel 9 mit Strom versorgt werden können.

Der flexible Führungsteil 2 besteht im Wesentlichen aus einem Schlauch 14, in dem eine hier nicht sichtbare flexible Führungsschiene 13 angeordnet ist, die sich vom oberen Abschnitte 8c über die Schlaufe 8b etwa bis zur Mitte des unteren Abschnitts 8a erstreckt.

In der Fig. 1 ist die Tischplatte 5 in einer oberen Position, in der das Tischbein 3 in gestreckter Stellung mit ausgefahrenen weiteren Abschnitten 3b und 3c vorliegt. Die Schlaufe 8b ist dabei relativ flach.

Die Fig. 2 zeigt den Schreibtisch 1 mit abgesenkter Tischplatte 5, wobei die weiteren Abschnitte 3b und 3c weitgehend in den jeweils vorigen Abschnitt 3a, 3b eingefahren sind. In dieser Stellung ist die Schlaufe 8b deutlich ausgeprägt, um der verringerten Höhe h der Tischplatte 5 Rechnung zu tragen. Es ist allerdings auch ersichtlich, dass der Krümmungsradius r, der durch die begrenzte Flexibilität der flexiblen Führungsschiene 13 zwar geringer ist als in der Stellung von Fig. 1, aber ein gewisses Mindestmaß nie unterschreitet.

Der gesamte Führungsteil 2 verbleibt dabei stets in der virtuellen Ebene, die durch das Tischbein 3 und den horizontalen Tischbeinausleger 4 aufgespannt wird.

Der untere Abschnitt 8a besitzt eine erste Achse 25, die in Gebrauchslage vertikal ist. Der obere Abschnitt 8c besitzt eine zweite Achse 26, die in Gebrauchslage ebenfalls vertikal ist und einen Abstand d zur ersten Achse 25 aufweist. Dieser Abstand d sollte etwa 20% des maximalen Höhenunterschieds h zwischen dem Fußteil 11 und dem Kopfteil 12 betragen, der dann auftritt, wenn die Tischplatte 5 in ihrer höchsten Stellung ist. Der genannte Prozentsatz kann in einem Bereich zwischen 10% und 40% und vorzugsweise zwischen 15% und 30% liegen.

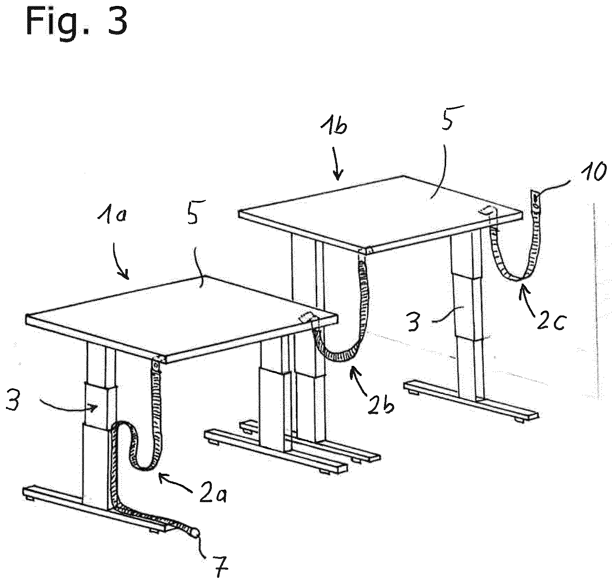

Fig. 3 zeigt mehrere Schreibtische 1a und 1b, die mit Kabelführungen 2a, 2b und 2c untereinander und mit einem Wandanschluss 10 verbunden sind. Der erste Schreibtisch 1a ist mit Bottom-Up Tischbeinen 3 ausgeführt, während der zweite Schreibtisch 1b mit Upside-Down Tischbeinen 3 ausgeführt ist.

Die erste Kabelführung 2a erstreckt sich von einem Stromstecker 7 oder einem anderen Anschlusselement bis zur Tischplatte 5 des ersten Schreibtischs 1a. Eine zweite Kabelführung 2b verbindet die Tischplatten 5 der beiden Schreibtische 1a und 1b, die sich - wie in Fig. 3 dargestellt - in unterschiedlichen Höhen befinden können. Eine dritte Kabelführung 2c erstreckt sich von der Tischplatte 5 des zweiten Schreibtischs 1b zu dem Wandanschluss 10.

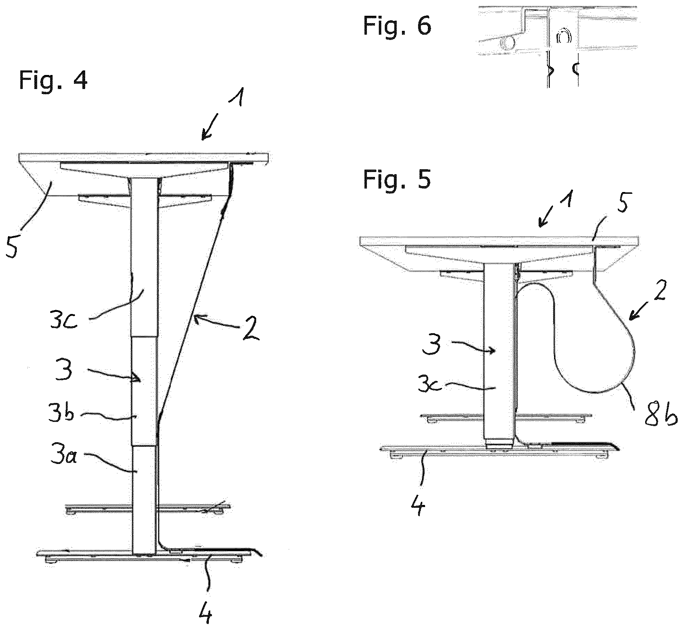

Fig. 4 und Fig. 5 zeigen einen Schreibtisch 1 mit Upside-Down Tischbeinen 3, wobei in der Fig. 4 eine angehobene Stellung der Tischplatte gezeigt ist, bei der die Kabelführung 2 in einer nahezu vollständig gestreckten Stellung vorliegt. In der abgesenkten Stellung von Fig. 5 ist die Schlaufe 8b deutlich ausgebildet.

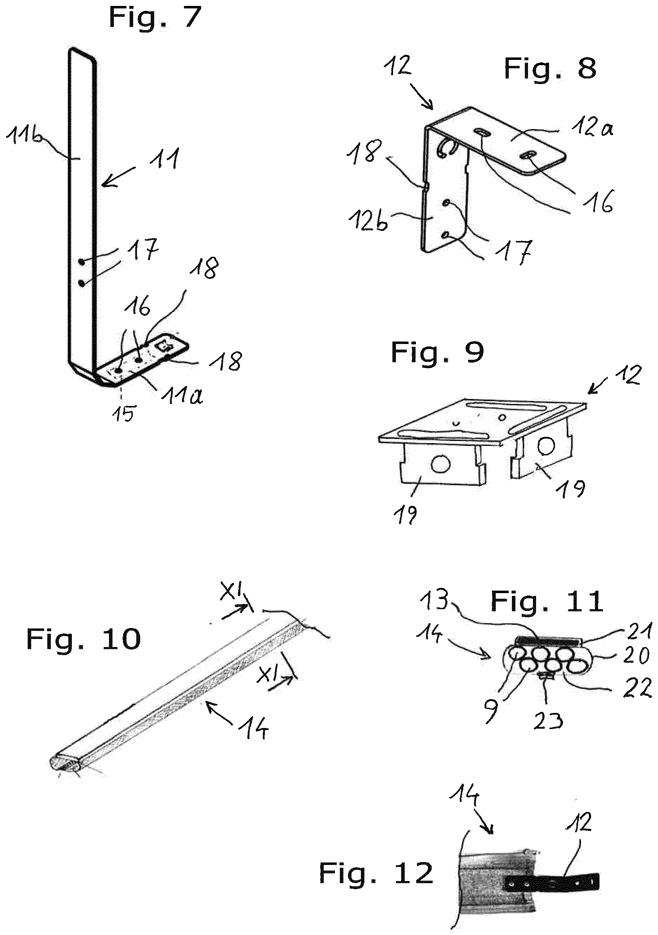

Fig. 7 zeigt einen Fußteil 11 der Kabelführung 2, der aus einem Stahlwinkel besteht, der einen Halteschenkel 11a und einen Führungsschenkel 11b aufweist, die rechtwinkelig zueinander angeordnet sind. Der Fußteil 11 kann wahlweise über Permanentmagnete 15, die auf der Unterseite angebracht sind, magnetisch oder über nicht dargestellte Schrauben, die durch Bohrungen 16 geführt werden, mechanisch am Tischbeinausleger 4 befestigt werden. Weitere Bohrungen 17 können zur Befestigung der flexiblen Führungsschiene 13 herangezogen werden. Ausnehmungen 18 am Rand dienen zur Festlegung einer nicht dargestellten Zugentlastung.

Der in Fig. 8 dargestellte Kopfteil 12 ist analog zum Fußteil 11 ausgebildet und weist ebenfalls einen Halteschenkel 12a und einen Führungsschenkel 12b auf. Auch im Kopfteil 12 sind Bohrungen 16, weitere Bohrungen 17 und Ausnehmungen 18 analog vorgesehen.

Ein alternativer Kopfteil 12 ist in Fig. 9 gezeigt, der mehrere Verbindungselemente 19 in der Form von Aufnahmen aufweist, in die jeweils ein Befestigungselement oder eine flexible Führungsschiene 13 direkt eingeschoben werden können, so dass mehrere Führungsteile 2 zusammengefasst werden können. Die Aufnahmen können dabei so ausgebildet sein, dass eine Schnappverbindung hergestellt wird.

In Fig. 10 und Fig. 11 ist ein Schlauch 14 dargestellt, der aus einem Gewebe mit hoher Zugfestigkeit besteht und der eine erste Kammer 21 und eine zweite Kammer 22 aufweist.

In der ersten Kammer 21 ist eine flexible Führungsschiene 13 mit rechteckigem Querschnitt angeordnet. Die zweite Kammer 22 kann durch einen Reißverschluss 23 geöffnet und verschlossen werden und dient als Aufnahmekanal 22 für die zu führenden Kabel 9, wobei es sich um Stromkabel zur Versorgung von Geräten oder um Datenkabel handeln kann. Der Reißverschluss 23 erstreckt sich bei dieser Ausführungsvariante über die gesamte Länge des Schlauchs 14.

Die Fig. 12 zeigt ein Ende eines Schlauchs 14 mit einem daran befestigten Kopfteil 12.

Die vorliegende Erfindung ermöglicht es, Kabel 9 formschön, sicher und leicht veränderlich zu höhenverstellbaren Schreibtischen 3 zu führen.

## Patentansprüche

1. Kabelführung für höhenverstellbare Büromöbel, mit einem Fußteil (11), einem flexiblen Führungsteil (2) und einem Kopfteil (12), wobei der flexible Führungsteil (2) aus einem Schlauch (14) besteht, in dem mindestens eine flexible Führungsschiene (13) in der Form eines biegeelastischen Stabes angeordnet ist und in dem ein Aufnahmekanal (22) für die zu führenden Kabel (9) vorgesehen ist, **dadurch gekennzeichnet, dass** der Fußteil (11) einen starren Führungsschenkel (11b) aufweist, der im Schlauch (14) teilweise anliegend an die flexible Führungsschiene (13) angeordnet ist.

2. Kabelführung nach Anspruch 1, **dadurch gekennzeichnet, dass** der starre Führungsschenkel (11b) fest mit dem Schlauch (14) verbunden ist.

3. Kabelführung nach einem der Ansprüche 1 oder 2, **dadurch gekennzeichnet, dass** der Fußteil (11) aus dem starren Führungsschenkel (11b) und einem dazu im Wesentlichen rechtwinkelig angeordneten Halteschenkel (11a) besteht.

4. Kabelführung nach Anspruch 3, **dadurch gekennzeichnet, dass** am Halteschenkel (11a) des Fußteils (11) magnetische Befestigungselemente in der Form von Permanentmagneten (15) angeordnet sind.

5. Kabelführung nach einem der Ansprüche 3 oder 4, **dadurch gekennzeichnet, dass** sowohl die flexible Führungsschiene (13) als auch der starre Führungsschenkel (11b) einen rechteckigen Querschnitt aufweisen.

6. Kabelführung nach einem der Ansprüche 1 bis 5, **dadurch gekennzeichnet, dass** der Schlauch (14) aus einem Gewebe besteht und zwei in Längsrichtung verlaufende Kammern (21, 22) aufweist.

7. Kabelführung nach einem der Ansprüche 1 bis 6, **dadurch gekennzeichnet, dass** der Schlauch (14) an mindestens einem Ende einen Reißverschluss (23) aufweist.

8. Kabelführung nach Anspruch 7, **dadurch gekennzeichnet, dass** sich der Reißverschluss (23) über die gesamte Länge des Schlauchs (14) erstreckt.

9. Kabelführung nach einem der Ansprüche 1 bis 8, **dadurch gekennzeichnet, dass** der Kopfteil (12) aus dem starren Führungsschenkel (12b) und einem Halteschenkel (12a) besteht.

10. Kabelführung nach einem der Ansprüche 1 bis 9, **dadurch gekennzeichnet, dass** am Fußteil (11) und/oder am Kopfteil (12) eine Zugentlastung angeordnet ist.

11. Kabelführung nach einem der Ansprüche 1 bis 10, **dadurch gekennzeichnet, dass** an mindestens einem Ende des Schlauchs (14) ein Befestigungselement (24) angebracht ist.

12. Kabelführung nach einem der Ansprüche 1 bis 11, **dadurch gekennzeichnet, dass** die flexible Führungsschiene (13) über eine Schnappverbindung an dem Kopfteil (12) anbringbar ist.

13. Kabelführung nach einem der Ansprüche 1 bis 12, **dadurch gekennzeichnet, dass** der Kopfteil (12) mehrere Verbindungselemente (19) zur Anbringung mehrerer Kabelführungen aufweist.

14. Kabelführung nach einem der Ansprüche 1 bis 13, **dadurch gekennzeichnet, dass** im eingebautem Zustand die Achse (25) des flexiblen Führungsteils (2) im Bereich des Fußteils (11) in einem Abstand (d) zur Achse (26) des flexiblen Führungsteils (2) im Bereich des Kopfteils (12) angeordnet ist.

15. Kabelführung nach Anspruch 14, **dadurch gekennzeichnet, dass** der Abstand (d) zwischen 10% und 40%, vorzugsweise zwischen 15% und 30% des maximalen Höhenunterschieds (h) zwischen dem Fußteil (11) und dem Kopfteil (12) beträgt.

## Claims

1. Cable guide for height-adjustable office furniture, having a base part (11), a flexible guide part (2), and a head part (12), wherein the flexible guide part (2) consists of a tube (14) in which at least one flexible guide rail (13) in the form of a bendable rod is arranged and in which a receiving channel (22) is provided for the cables (9) to be guided, **characterized in that** the base part (11) has a rigid guide leg (11b) which is arranged in the tube (14) partially adjacent to the flexible guide rail (13).

2. Cable guide according to claim 1, **characterized in that** the rigid guide leg (11b) is firmly connected to the tube (14).

3. Cable guide according to one of claims 1 or 2, **characterized in that** the base part (11) consists of the rigid guide leg (11b) and a retaining leg (11a) arranged essentially at right angles thereto.

4. Cable guide according to claim 3, **characterized in that** magnetic fastening elements in the form of permanent magnets (15) are arranged on the retaining leg (11a) of the base part (11).

5. Cable guide according to one of claims 3 or 4, **characterized in that** both the flexible guide rail (13) and the rigid guide leg (11b) have a rectangular cross-section.

6. Cable guide according to one of claims 1 to 5, **characterized in that** the tube (14) consists of a fabric and has two chambers (21, 22) extending in the longitudinal direction.

7. Cable guide according to one of claims 1 to 5, **characterized in that** the tube (14) has a zipper (23) at at least one end.

8. Cable guide according to claim 7, **characterized in that** the zipper (23) extends over the entire length of the tube (14).

9. Cable guide according to one of claims 1 to 8, **characterized in that** the head part (12) consists of the rigid guide leg (12b) and a retaining leg (12a).

10. Cable guide according to one of claims 1 to 9, **characterized in that** a strain relief is arranged on the base part (11) and/or on the head part (12).

11. Cable guide according to one of claims 1 to 10, **characterized in that** a fastening element (24) is attached to at least one end of the tube (14).

12. Cable guide according to one of claims 1 to 11, **characterized in that** the flexible guide rail (13) can be attached to the head part (12) via a snap connection.

13. Cable guide according to one of claims 1 to 12, **characterized in that** the head part (12) has several connecting elements (19) for attaching several cable guides.

14. Cable guide according to one of claims 1 to 13, **characterized in that,** when installed, the axis (25) of the flexible guide part (2) in the area of the base part (11) is arranged at a distance (d) from the axis (26) of the flexible guide part (2) in the area of the head part (12).

15. Cable guide according to claim 14, **characterized in that** the distance (d) is between 10% and 40%, preferably between 15% and 30%, of the maximum height difference (h) between the base part (11) and the head part (12).

## Revendications

1. Guide-câble pour meuble de bureau de hauteur réglable comprenant une partie (11) de pied, une partie (2) souple de guidage et une partie (12) de tête, dans lequel la partie (2) souple de guidage est constituée d'un tuyau (14) flexible, dans lequel est disposé au moins un rail (13) souple de guidage sous la forme d'une barre ayant de l'élasticité à la flexion et dans lequel est prévu un conduit (22) de réception du câble (9) à guider, **caractérisé en ce que** la partie (11) de pied a une branche (11b) rigide de guidage, qui est disposée dans le tuyau (14) flexible en s'appliquant en partie au rail (13) souple de guidage.

2. Guide-câble suivant la revendication 1, **caractérisé en ce que** la branche (11b) rigide de guidage est reliée fixement au tuyau (14) flexible.

3. Guide-câble suivant l'une des revendication 1 ou 2, **caractérisé en ce que** la partie (11) de pied est constituée de la branche (11b) rigide de guidage et d'une branche (11a) de maintien, qui y est disposée sensiblement à angle droit.

4. Guide-câble suivant la revendication 3, **caractérisé en ce que** des éléments magnétiques de fixation sous la forme d'aimants (15) permanents sont montés sur la branche (11a) de maintien de la partie (11) de pied.

5. Guide-câble suivant l'une des revendications 3 ou 4, **caractérisé en ce que** tant le rail (13) souple de guidage qu'également la branche (11b) rigide de guidage ont une section transversale rectangulaire.

6. Guide-câble suivant l'une des revendications 1 à 5, **caractérisé en ce que** le tuyau (14) flexible est en un tissu et a deux chambres (21, 22) s'étendant dans la direction longitudinale.

7. Guide-câble suivant l'une des revendications 1 à 6, **caractérisé en ce que** le tuyau (14) flexible a une fermeture (23) glissière à au moins une extrémité.

8. Guide-câble suivant la revendication 7, **caractérisé en ce que** la fermeture (23) glissière s'étend sur toute la longueur du tuyau (14) flexible.

9. Guide-câble suivant l'une des revendications 1 à 8, **caractérisé en ce que** la partie (12) de tête est constituée de la branche (12b) rigide de guidage et d'une branche (12a) de maintien.

10. Guide-câble suivant l'une des revendications 1 à 9, **caractérisé en ce qu'**une décharge de traction est montée sur la partie (11) de pied et/ou sur la partie (12) de tête.

11. Guide-câble suivant l'une des revendications 1 à 10, **caractérisé en ce qu'**un élément (24) de fixation est monté sur au moins une extrémité du tuyau (14) flexible.

12. Guide-câble suivant l'une des revendications 1 à 11, **caractérisé en ce que** le rail (13) souple de guidage peut être monté sur la partie (12) de tête par une liaison à déclic.

13. Guide-câble suivant l'une des revendications 1 à 12, **caractérisé en ce que** la partie (12) de tête a plusieurs éléments (19) d'assemblage pour le montage de plusieurs guide-câble.

14. Guide-câble suivant l'une des revendications 1 à 13, **caractérisé en ce que**, à l'état monté, l'axe (25) de la partie (2) souple de guidage est disposé, dans la zone de la partie (11) de pied, à une distance (d) de l'axe (26) de la partie (2) souple de guidage dans la zone de la partie (12) de tête.

15. Guide-câble suivant la revendication 14, **caractérisé en ce que** la distance (d) représente entre 10% et 40%, de préférence entre 15 % et 30 % de la différence (h) maximum de niveau entre la partie (11) de pied et la partie (12) de tête.
